# Europäisches Patentamt

# European Patent Office

# Office européen des brevets

(19)

(11) Veröffentlichungsnummer: **0 037 086**
**B1**

(12) **EUROPÄISCHE PATENTSCHRIFT**

(45) Veröffentlichungstag der Patentschrift:
23.07.86

(51) Int. Cl.⁴: **A 23 B 4/10, A 23 B 4/14**

(21) Anmeldenummer: **81102293.8**

(22) Anmeldetag: **26.03.81**

(54) **Mittel zum Herstellen von pigmentierten Schutzüberzügen auf Fleischwaren.**

(30) Priorität: **28.03.80 DE 3012192**

(43) Veröffentlichungstag der Anmeldung:
**07.10.81 Patentblatt 81/40**

(45) Bekanntmachung des Hinweises auf die Patenterteilung:
**23.07.86 Patentblatt 86/30**

(84) Benannte Vertragsstaaten:
**AT BE CH DE FR GB IT LI LU NL SE**

(56) Entgegenhaltungen:
**BE-A-461 935**
**BE-A-792 401**
**DE-A-2 412 426**
**DE-B-2 324 936**
**FR-A-734 544**
**FR-A-1 215 931**
**FR-A-2 365 294**
**LU-A-31 499**
**NL-A-294 294**
**US-A-2 840 476**
**US-A-3 000 748**
**US-A-3 192 057**
**US-A-3 388 085**

(73) Patentinhaber: **Stemmler, Matthias, Konrad-Adenauer- Ufer 35, D-5000 Köln 1 (DE)**
Patentinhaber: **Stemmler, Heinz, Konrad- Adenauer-Ufer 35, D-5000 Köln 1 (DE)**

(72) Erfinder: **Stemmler, Matthias, Konrad- Adenauer-Ufer 35, D-5000 Köln 1 (DE)**
Erfinder: **Stemmler, Heinz, Konrad- Adenauer- Ufer 35, D-5000 Köln 1 (DE)**

(74) Vertreter: **von Kreisler, Alek, Dipl.- Chem., Deichmannhaus am Hauptbahnhof, D-5000 Köln 1 (DE)**

LIBER, STOCKHOLM 1986

## Beschreibung

Es ist bekannt, Rohwürste wie z.B. Salami mit einem weissen Überzug zu beziehen, indem man sie mittels wasserlöslichem Bindemittel in eine wässrige Pigmentaufschlämmung von beispielsweise Titandioxid oder Kreide mit einem Wassergehalt von 50 - 60 % taucht. Danach wird die mit einem weissen Überzug versehene Salami aus dem Tauchbad genommen und getrocknet. Die Trocknungszeit beträgt 12 - 48 Stunden. Dies ist besonders nachteilig, weil die Produktion mehrerer Tage für den Trocknungsprozess untergebracht werden muss, was viel Platz erfordert. Durch, diese lange Trocknungszeit, während der sich das Wurstgut in dem feuchten Medium der Bezugsmasse befindet, können unerwünschte Fremdstoffe in das Wurstgut eindringen. Es ist ferner bekannt, daß der auf die oben beschriebene Weise hergestellte weisse Überzug ertgegen den gesetzlichen Bestimmungen sich außerordentlich schlecht vom Wurstgut trennen lässt. Fermer entsteht bei diesem Verfahren der unerwünschte Trockenrand unter der Wursthaut.

Das oben geschilderte Verfahren ist z.Zt. das einzige Verfahren, das zur Herstellung von mit einem weissen Überzug versehenes Salami bekannt ist und durchgeführt wird. Wie geschildert, ist dieses Verfahren außerordentlich zeitraubend und arbeitsaufwendig.

Aus der DE-PS 22 22 280 ist ein Verfahren zum Herstellen eines Schutzüberzuges auf Fleischprodukten auf der Basis von acetylierten Monogliceriden bekannt, bei dem man die Fleischprodukte in ein geschmolzenes, destilliertes Monoglycerid taucht, dessen Hydroxylgruppen teilweise acetyliert sind und das 1 - 20 Gew -% eines niedrigmolekularen Polyäthyᴸ äthacrylatharzes enthält. Die dabei entstehen... Schutzüberzüge sind glasklar und durchsichtig.

Aus der DE-PS 23 24 936 ist ein Mittel zum Herstellen von glasklaren Überzügen auf geräucherten Fleischwaren bekannt, das ein acetyliertes Monoglycerid und Cellulosepropionat in bestimmten Gewichtsverhältnissen und Aceton als Lösungsmittel enthält. Auch hierbei werden durchsichtige Überzüge erhalten.

In den vorstehend genannten DE-PSen wird auch noch weiterer Stand der Technik geschildert, der sich auf die Herstellung von Schutzüberzügen auf Fleischprodukten auf der Basis von acetylierten Monogliceriden und Celluloseestern bezieht.

Die Erfindung stellt sich die Aufgabe, ein neues Mittel zum Herstellen pigmentierter Schutzüberzüge auf Fleischwaren zu schaffen, das die oben geschilderten Nachteile nicht aufweist.

Gelöst wird die Aufgabe durch das erfindungsgemässe Mittel zum Herstellen pigmentierter Schutzüberzüge auf Fleischwaren auf der Basis von acetylierten Monogliceriden und Celluloseestern, das dadurch gekennzeichnet ist, daß es
a) ein destilliertes, acetyliertes Monoglycerid, dessen Hydroxylgruppen im Falle einer Gewinnung der Monoglyceride aus Schweineschmalz zu 2/3 und im Falle einer Gewinnung der Monoglyceride aus Baumwollsamenöl zur Hälfte acetyliert sind,
b) künstliche Wachse aus der Gruppe Paraffinwachse und gegebenenfalls mikrokristalline Wachse, wobei die Paraffinwachse aus der Gruppe Hartparaffine mit einem Schmelzpunkt von 43 - 75 °C (DIN 51556) und das gegebenenfalls vorhandene mikrokristalline Wachs aus der Gruppe von Gemischen gereinigter, fester, überwiegend verzweigter, gesättigter mikrokristalliner Kohlenwasserstoffe aus Erdöl mit einem Schmelzpunkt von 50 - 90°C (DIN 51556) ausgewählt sind;
c) Celluloseester aus der Gruppe Celluloseacetat, Celluloseacetobutyrat oder insbesondere Cellulosepropionat; und
d) Pigmente
enthält.

Das Mittel gemäss der Erfindung wird zur Herstellung von pigmentierten Schützüberzügen auf Fleischwaren und insbesondere auf geräucherten Fleischwaren wie Rohwürsten und Rohfleisch verwendet. Beispiele für Rohwürste sind Salami, Mettwürste, Katenrauchwürste. Beispiele für Rohfleisch sind Schinken, Schinkenspeck, Bündnerfleisch und Neuenahrer-Fleisch.

Als destillierte, acetylierte Monoglyeride kommen solche infrage, die nach dem Lebensmittelgesetz zulässig sind. Zum Beispiel haben sich diejenigen Monoglyceride, die in der DE-PS 22 22 280 beschrieben sind, als besonders geeignet erwiesen. Als Fettquelle zur Gewinnung dieser Monoglyceride dienen u.a. hydriertes Schweinefett bzw. Schweineschmalz und hydriertes Baumwollsamenöl.

Das aus Schweinefett bzw. Schweineschmalz gewonnene Monoglycerid wird so weit acetyliert, daß 2/3 der freien Hydroxylgruppen besetzt sind. Dieses acetylierte Monoglycerid ist ein weisser, wachsartiger fester Stoff, der sich nicht fettig anfühlt und folgende Eigenschaften hat:
Schmelzpunkt 37 bis 40°C
Refraktionsindex bei +50°C 1,442
Viskosität bei +50°C 27 cps
Jodzahl 3 max.
Monoglycerid etwa 7 %
Acetylierung 66 bis 70 %
Säurezahl weniger als 4.

Die aus hydriertem Baumwollsamenöl gewonnenen Monoglyceride werden nur so weit acetyliert, daß die Hälfte der Hydroxylgruppen acetyliert sind. Auch ein solcher Monoglycerid ist ein kremiger, weisser, wachsartiger Feststoff, der sich nicht fettig anfühlt und folgende Eigenschaften hat:
Schmelzpunkt 41 bis 46°C
clear point 60°C
(Temperatur, bei der das geschmolzene Monoglycerid klar ist)

Refraktionsindex bei + 60°C etwa 1,441
Viskosität bei + 50°C 30 cps
spez.Gewicht bei + 50°C 0,94 (flüssig)
Jodwert max. 3 %
Monoglycerid etwa 18 %
Acetylierung 48 bis 52 %
Säurezahl weniger als 4.

Als künstliche Wachse, d.h. Paraffinwachse und/oder mikrokristalline Wachse, kommen solche von Lebensmittelqualität infrage, die den Bestimmungen des Lebensmittelgesetzes entsprechen. Beispiele für die Paraffinwachse sind die in der Zusatzstoffverkehrsverordnung vom 20.12.1977 zum Lebensmittelgesetz genannten Hartparaffine aus Gemischen gereinigter, überwiegend geradkettiger gesättigter Kohlenwasserstoffe aus Erdöl, die eine weisse bis durchscheinende, geruchslose, wachsartige bis brüchige Masse vom F.P. 43 - 75°C (DIN 51556) einer Viskosität bei 100°C von max. 5,8 Centistokes und einer Jodfarbzahl von max 1.

Beispiele für die mikrokristallinen Wachse sind die in der obigen Verordnung genannten Gemische gereinigter, fester, überwiegend verzweigter, gesättigter, mikrokristalliner, Kohlenwasserstoffe aus Erdöl, die eine weisse, harte, geruchlose Masse vom F.p. 50 - 90°C (DIN 51556), einer Viskosität von 5,8 - 35 Centistokes und einer Jodfarbzahl von max. 60.

Als Celluloseester kommen Celluloseacetat, Celluloseacetobutyrat und insbesondere Cellulosepropionat infrage. Bevorzugt wird ein Cellulosepropionat von niedriger Viskosität von 0,2 bis 20 Sec[b], vorzugsweise 0,2 bis 10 Sec[b] und insbesondere 0,5 Sec[b], gemessen nach ASTM D-871-48, das z.B. von Eastman Kodak hergestellt wird und unter der Bezeichnung CAP 0,5 im Handel erhältlich ist.

Als Pigmente für das Überzugsmittel kommen alle Pigmente infrage, die den Bestimmungen des Lebensmittelgesetzes entsprechen und zulässig sind. Insbesondere enthält das Mittel für die Herstellung von weissen Schutzüberzügen Pigmente aus der Gruppe Titandioxid, Calciumphosphat, Kaliummetaphosphat, Natriummetaphosphat, Magnesiumsilikat, Schlämmkreide, Kreide und Kalkderivate. Von diesen wird Titandioxid z.Zt. besonders bevorzugt.

Zur Herstellung von andersfarbigen pigmentierten Schutzüberzügen enthält das Mittel gemäss der Erfindung entsprechend andere lebensmittelrechtlich zulässige Pigmente, die dem Fachmann bekannt sind. Beispielsweise enthält das Mittel zur Herstellung eines schwarzen Schutzüberzugs ein schwarzes Pigment, wie z.B. Eisenoxid Schwarz, Tierkohle und Holzkohle sowie für ein braunes Pigment Eisenoxid Braun.

Je nach Art der zu überziehenden Fleischware bzw. der Farbe des auf den Fleischwaren zu erzeugenden undurchsichtigen Schutzüberzuges können die Mengenverhältnisse der Komponenten a), b), c) und d) variieren. Als geeignet haben sich für die Komponente a) Mengen von 20 bis 60, vorzugsweise 25 bis 45 und insbesondere 30 bis 35 Gew.-Teile erwiesen. Für die Komponente b) haben sich Mengen von 30 bis 70, vorzugsweise 40 bis 60 und insbesondere 50 bis 55 Gew.-Teilen als geeignet erwiesen.

Die Komponente c) liegt geeigneter Weise in einer Menge von 5 bis 20, vorzugsweise 6 bis 15 und insbesondere 8 bis 12 Gew.-Teilen vor. Die Komponente d) liegt geeigneter Weise in einer Menge von 5 bis 25, vorzugsweise 12 bis 20 und insbesondere 10 bis 17 Gew.-Teilen vor.

Als Mittel zum Überziehen von Salami zur Herstellung eines weissen Schutzüberzugs auf der Salami, d.h. zur Herstellung einer sog. "weissen Salami" hat sich besonders eine Zusammensetzung bewährt, die 30 bis 35 Gew.-Teile destilliertes acetyliertes Monoglycerid, 50 bis 55 Gew.-Teile Paraffinwachs und ggfls. Mikrowachs, 8 bis 12 Gew.-Teile Cellulosepropionat niedriger Viskosität und 9 bis 11 Gew.-Teile, z.B. 10 Gew.-Teile Titandioxid enthält.

Zur Erzielung eines matten Aussehens des weissen Schutzüberzugs auf der Salami kann beispielsweise unlösliches Calciummetaphosphat oder Magnesiumsilikat verwendet werden.

Wegen der Vielzahl der so grundverschiedenartigen geräucherten Fleischwaren ist es von vorn herein unmöglich, für alle diese Waren Beispiele anzugeben, was im übrigen auch überflüssig ist, da es für den Fleischfachmann keine Schwierigkeit bereitet, das für jede Fleischart am vorteilhaftesten zusammengesetzte Mittel durch Handversuche zu ermitteln.

Zum Aufbringen des pigmentierten Schutzüberzuges wird die Fleischware z.B. die Rohwurst wie eine Salami oder das Rohfleisch wie ein Schinken in das Mittel bei einer Eintauchtemperatur von 100 bis 120°C getaucht. Die Eintauchzeit beträgt einige Sekunden, wobei gewöhnlich 3 - 4 Sekunden ausreichen. Eine im Bereich dieser Zeit liegende Eintauchzeit ist notwendig, um eine sterile Oberfläche zu erreichen.

Die Abtropf- und Erstarrungszeit beträgt nur etwa 30 Sekunden. Die weiss überzogenen Fleischwaren wie z.B. die Rohwürste oder das Rohfleisch können nach weiteren 60 Sekunden bereits verpackt werden.

Der pigmentierte Schutzüberzug z.B. der weisse Schutzfilm hat eine Filmstärke von etwa 3 Gew.-% bei einer Eintauchtemperatur von etwa 120°C und 4 bis 4,5 Gew.-% bei einer Eintauchtemperatur von etwa 100°C, bezogen auf das Gesamtgewicht der überzogenen Fleischwaren, z.B. der Rohwurst.

Die erhaltenen Überzüge sind pigmentiert, d.h. undurchsichtig, z.B. weiss, und dünn und lassen sich leicht wieder von der Fleischware abziehen. Sie haben ferner die bemerkenswerte Eigenschaft, daß sie für Wasserdampf beschränkt durchlässig sind. Das bedeutet, daß der pigmentierte Schutzfilm zum molekularen Gasaustausch fähig ist. Die damit verbundenen Wasserhaushaltregulierenden Eigenschaften verhindern den bei dem bekannten Verfahren zur Herstellung eines pigmentierten weissen Schutzüberzugs auftretenden unvermeidlichen und unerwünschten Trockenrands. Weiter verhindert der weisse Schutzüberzug den Trockenverlust wesentlich, was für die Qualitätserhaltung von entscheidender Bedeutung ist.

Die mit dem Mittel gemäss der Erfindung hergestellten Überzüge verhindern ferner nicht das Durchtreten von Geruchsstoffen, so daß der Käufer die Ware, wie er es gewohnt ist, nicht nur mit den Augen, sondern auch mit der Nase prüfen kann. Der Käufer kann also die Fleischware auf ihre natürliche Beschaffenheit prüfen.

Die Überzüge aus dem Mittel gemäss der Erfindung sind ferner ohne Warenbeeinträchtigung bis zu etwa 50°C wärmebeständig und die Kältebeständigkeit des Schutzfilms ohne Warenbeeinträchtigung bis zu etwa -40°C ist gewährleistet. Die Überzüge sind widerstandsfähig gegen Druck, Stoß und sonstige stärkere äußere Einwirkungen, die die Fleischware ohne den Schutzüberzug nicht vertragen würde. Es handelt sich hier also auch sozusagen um ein neuartiges Verpackungssystem, wobei der durch das erfindungsgemässe Mittel gebildete undurchsichtige, z.B. weisse, Schutzüberzug eine flexible und hygienische Verpackung gewährleistet.

Ein weiterer wesentlicher Gesichtspunkt insbesondere für die Herstellung von weissen Schutzüberzügen ist die Tatsache, daß der Schutzüberzug oder Schutzfilm absolut wasserfrei ist. Der neue Schutzfilm hat die Eigenschaft, eine Verdunstungssperre zu bilden, die den normalen Gewichtsverlust nahezu ausschaltet.

Ein Vergleich anhand der nach dem bisher bekannten Verfahren hergestellten weissen Salami und der mit dem erfindungsgemässen Mittel hergestellten weissen Salami ergibt folgendes:

Nach dem bekannten Verfahren wird die weisse Salami durch Tauchen in eine wässrige Aufschlämmung aus Titandioxid und/oder Kreide mit einem Wassergehalt von 50 - 60 % hergestellt. Schon die Aufschlämmung ist nicht einfach herzustellen und nicht gut handhabbar. Nach dem Herausnehmen aus der Tauchmasse wird 12 - 48 Stunden getrocknet, wodurch außer Zeitverlust ein hoher Platzbedarf erforderlich ist und außerdem eine Verunreinigung der Salami erfolgen kann.

Demgegenüber wird mit dem erfindungsgemässen Mittel eine weisse Salami hergestellt, indem man sie in eine Tauchmasse aus einem acetylierten Monoglycerid, einem Paraffin, wachs und/oder mikrokristallinem Wachs, einem Cellulosepropionat niedriger Viskosität und Titandioxid 3-4 Sekunden taucht. Die Trocknungszeit, d.h. die Abtropf- und Erstarrungszeit beträgt nur 30 Sekunden und nach weiteren 60 Sekunden können die weiss bezogenen Salami bereits verpackt werden. Dies stellt einen gewaltigen und unerwarteten technischen Fortschritt dar.

Weiterhin ermöglicht der weisse Schutzüberzug auf der Salami einen molekularen Gasaustausch und die damit verbundenen wasserhaushaltsregulierenden Eigenschaften verhindern den unerwünschten Trockenrand, der bei dem bisher bekannten Verfahren zur Herstellung von weisser Salami unvermeidbar war.

Der mit dem erfindungsgemässen Mittel hergestellte weisse Schutzüberzug lässt sich bruchlos von der Salamiwurst abziehen, während dies bei der bekannten Überzugsmasse nicht möglich ist, da hier nur jeweils einzelne Stücke abgezogen werden können.

Der mit dem erfindungsgemässen Mittel erzielte weisse Schutzüberzug oder Schutzfilm für die weisse Salami ist absolut wasserfrei und gewährleistet eine flexible und hygienische Verpackung.

Zur Herstellung von Überzügen gemäss der Erfindung wird zunächst eine Tauchmasse hergestellt, indem man z.B. 30 kg eines vorstehend angegebenen acetylierten Monoglycerids, 50 kg eines Paraffinwachses, 10 kg Cellulosepropionat und 12 kg Titandioxid in einen auf 185°C erhitzten Schnellmischer gibt und mischt. Danach wird abgekühlt und die Masse in einen Behälter abgefüllt.

**Ausführungsbeispiel**

In einem aus einem für die Behandlung von Lebensmitteln geeigneten Werkstoff hergestellten, beheizbaren Behälter werden 200 kg der vorstehend angegebenen Tauchmasse auf 100 bis 120°C erhitzt. In die geschmolzene Masse werden Rohwürste 3-4 Sekunden eingetaucht, dann aus der Masse herausgenommen und 30 Sekunden abtropfen und trocknen gelassen. Nach weiteren 60 Sekunden werden die mit dem weissen Schutzüberzug bezogenen Würste in üblicher Weise verpackt.

Auf diese Weise werden Rohwürste wie z.B. Salamiwürste mit einem weissen Schutzüberzug erhalten, der die oben geschilderten überraschenden und vorteilhaften Eigenschaften aufweist.

**Patentansprüche**

1. Mittel zum Herstellen von pigmentierten Schutzüberzügen auf Fleischwaren auf der Basis von acetylierten Monoglyceriden und Celluloseestern, dadurch gekennzeichnet, daß es

a) ein destilliertes, acetyliertes Monoglycerid, dessen Hydroxylgruppen im Falle einer Gewinnung der Monoglyceride aus Schweineschmalz zu 2/3 und im Falle einer Gewinnung der Monoglyceride aus Baumwollsamenöl zur Hälfte acetyliert sind,

b) künstliche Wachse aus der Gruppe Praffinwachse und gegebenenfalls mikrokristalline Wachse, wobei die Paraffinwachse aus der Gruppe Hartparaffine mit einem Schmelzpunkt von 43 - 75 °C (DIN 51556) und das gegebenenfalls vorhandene mikrokristalline Wachs aus der Gruppe von Gemischen gereinigter, fester, überwiegend verzweigter, gesättigter mikrokristalliner Kohlenwasserstoffe aus Erdöl mit einem Schmelzpunkt von 50 - 90°C (DIN 51556) ausgewählt sind;

c) Celluloseester aus der Gruppe Celluloseacetat, Celluloseacetobutyrat oder insbesondere Cellulosepropionat; und

d) Pigmente enthält.

2. Mittel nach Anspruch 1, dadurch gekennzeichnet, daß die Komponente a) in einer Menge von 20 bis 60, vorzugsweise 25 bis 45 und insbesondere 30 bis 35 Gew.-Teilen vorliegt.

3. Mittel nach Ansprüchen 1 und 2, dadurch gekennzeichnet, daß die Komponente b) in einer Menge von 30 bis 70, vorzugsweise 40 bis 60 und insbesondere 50 bis 55 Gew.-Teilen vorliegt.

4. Mittel nach Ansprüchen 1 - 3, dadurch gekennzeichnet, daß die Komponente c) in einer Menge von 5 bis 20, vorzugsweise 5 bis 15 und insbesondere 8 bis 12 Gew.-Teilen vorliegt.

5. Mittel nach Ansprüchen 1 - 4, dadurch gekennzeichnet, daß die Komponente d) in einer Menge von 5 bis 25, vorzugsweise 12 bis 20 und insbesondere 10 bis 17 Gew.-Teilen vorliegt.

6. Mittel nach Ansprüchen 1 - 5,dadurch gekennzeichnet, daß die Komponente c) aus Cellulosepropionat niedriger Viskosität von 0,2 bis 20 Sec.[b] besteht.

7. Mittel nach Ansprüchen 1 - 6 zum Herstellen eines weissen Überzugs auf geräucherten rohen Fleischwaren, dadurch gekennzeichnet, daß die Komponente d) aus Titandioxid, Calciumphosphat, Kaliummmetaphosphat, Natriummetaphosphat, Magnesiumsilikat, Schlämmkreise, Kreide und/oder Kalkderivaten besteht.

8. Mittel nach Ansprüchen 1 - 6, dadurch gekennzeichnet, daß die Komponente d) ein nicht weisses, z.B. ein schwarzes oder braunes Pigment wie Eisenoxid Schwarz, Eisenoxid Braun, Tierkohle oder Holzkohle ist.

9. Mittel nach Ansprüchen 1 - 7 zur Herstellung eines weissen Schutzüberzuges für Salami, dadurch gekennzeichnet, daß es

a) destilliertes, acetyliertes Monoglycerid in einer Menge von 30 bis 35 Gew.-Teilen,

b) Paraffinwachs und gegebenenfalls Mikrowachs in einer Menge von 50 bis 55 Gew.-Teilen,

c) Cellulosepropionat niedriger Viskosität in einer Menge von 8 bis 12 Gew.-Teilen und

d) Titandioxid in einer Menge von 9 bis 11 Gew.-Teilen enthält.

10. Mit dem Mittel nach Ansprüchen 1 - 9 überzogene geräucherte Fleischwaren, insbesondere Rohwürste und Rohfleisch.

11. Mit dem Mittel nach Ansprüchen 1 - 7 und 9 überzogene weisse Salami.

## Claims

1. A composition for the manufacture of pigmented protective coatins for meat products which coatings are based on acetylated monoglycerides and cellulose esters, characterized in that the composition contains

a) a distilled acetylated mono glyceride, the hydroxyl groups of which have been acetylated in an amount of 2/3 thereof in the case of recovering the monoglycerides from pork lard and in an amount of 1/2 thereof in the case of recovering the monoglycerides from cotton seed oil,

b) synthetic waxes selected from the group comprising paraffin waxes and, optionally, micro crystalline waxes, the paraffin waxes having been selected from the group comprising hard paraffines having a melting point of from 43 to 75°C (DIN 51556) and the micro crystalline wax, if present, having been selected from the group comprising mixtures of purified solid mostly branched saturated micro crystalline hydro carbons from petroleum and having a melting point of from 50 to 90°C (DIN 51556);

c) cellulose esters from the group comprising cellulose acetate, cellulose acetobutyrate or, more particularly, cellulose propionate; and

d) pigments.

2. The composition according to claim 1, characterized in that the component a) is present in an amount of from 20 to 60, preferably from 25 to 45 and more particularly from 30 to 35 parts by weight.

3. The composition according to claims 1 and 2, characterized in that the component b) is present in an amount of from 30 to 70, preferably from 40 to 60, and more particularly from 50 to 55 parts by weight.

4. The composition according to claims 1 to 3, characterized in that the component c) is present in an amount of from 5 to 20, preferably from 5 to 15, and more particularly from 8 to 12 parts by weight.

5. The composition according to claims 1 to 4, characterized in that the component d) is present in an amount of from 5 to 25, preferably from 12 to 20, and more particularly from 10 to 17 parts by weight.

6. The composition according to claims 1 to 5, characterized in that the component c) consists of cellulose propionate having a low viscosity of from 0.2 to 20 sec[b].

7. The composition according to claims 1 to 6 for the manufacture of a white coating on products of smoked raw meat, characterized in that the component d) consists of titaniumdioxid, calcium phosphate, potassium meta phosphate, sodium meta phosphate, magnesium silicate, whiting, chalk and/or chalk derivatives.

8. The composition according to claims 1 to 6 characterized in that the component d) is a non-white pigment, e.g. a black or brown pigment such as iron oxide black, iron oxide brown, animal charcoal or wood charcoal.

9. The composition according to claims 1 to 7 for the manufacture of a white protective coating for salami, characterized in that it contains

a) a distilled acetylated mono glyceride in an amount of from 30 to 35 parts by weight,

b) a paraffin wax and optionally micro wax in an amount of from 50 to 55 parts by weight;

c) cellulose propionate having a low viscosity in an amount of from 8 to 12 parts by weight, and

d) titanium dioxide in an amount of from 9 to 11 parts by weight.

10. Smoked meat products, more particularly raw sausages and raw meat, coated with a composition according to claims 1 to 9.

11. White salami coated with a composition according to claims 1 to 7 and 9.


**Revendications**

1. Agent pour la fabrication de couches protectrices pigmentées sur de la charcuterie, à base de monoglycérides acétylés et d'esters de cellulose, caractérisé en ce qu'il contient

a) un monoglycéride distillé, acétylé, dont les groupes hydroxyle sont acétylés aux 2/3 dans le cas d'une production des monoglycérides à partir de saindoux de porc, et à la moitié dans le cas d'une production des monoglycérides à partir d'huile de coton,

b) des cires artificielles, du groupe des cires de paraffine et éventuellement des cires microcristallines, les cires de paraffine étant choisies dans le groupe des paraffines dures ayant un point de fusion de 43-75° C (DIN 51556), et la cire microcristalline éventuellement présente étant choisie dans le groupe de mélanges d'hydrocarbures dérivant du pétrole, ayant un point de fusion de 50-90° C (DIN 51556), microcristallins, saturés, essentiellement ramifiés, solides et épurés;

c) des esters de cellulose, du groupe comprenant l'acétate de cellulose, l'acétobutyrate de cellulose ou en particulier le propionate de cellulose; et

d) des pigments.

2. Agent selon la revendication 1, caractérisé en ce que le constituant a) est présent en une quantité de 20 à 60, de préférence de 25 à 45 et en particulier de 30 à 35 parties en poids.

3. Agent selon les revendications 1 et 2, caractérisé en ce que le constituant b) est présent en une quantité de 30 à 70, de préférence de 40 à 60 et en particulier de 50 à 55 parties en poids.

4. Agent selon les revendications 1 à 3, caractérisé en ce que le constituant c) est présent en une quantité de 5 à 20, de préférence de 5 à 15 et en particulier de 8 à 12 parties en poids.

5. Agent selon les revendications 1 à 4, caractérisé en ce que le constituant d) est présent en une quantité de 5 à 25, de préférence 12 à 20 et en particulier 10 à 17 parties en poids.

6. Agent selon les revendications 1 à 5, caractérisé en ce que le constituant c) est constitué de propionate de cellulose de basse viscosité, de 0,2 à 20 sec[b].

7. Agent selon les revendications 1 à 6 pour la fabrication d'un revêtement blanc sur de la charcuterie brute fumée, caractérisé en ce que le constituant d) est constitué de dioxyde de titane, de phosphate de calcium, de métaphosphate dépotassium, de métaphosphate de sodium, de silicate de magnésium, de blanc lavé, de craie et/ou de dérivés de la chaux.

8. Agent selon les revendications 1 à 6, caractérisé en ce que le constituant d) est un pigment non-blanc, par exemple un pigment noir ou brun, comme l'oxyde de fer noir, l'oxyde de fer brun, le noir animal ou le charbon de bois.

9. Agent selon les revendications 1 à 7 pour la fabrication d'une couche protectrice blanche pour le salami, caractérisé en ce qu'il contient

a) un monoglycéride acétylé, distillé, en une quantité de 30 à 35 parties en poids,

b) une cire de paraffine et éventuellement une cire microcristalline en une quantité de 50 à 55 parties en poids,

c) du propionate de cellulose de faible viscosité, en une quantité de 8 à 12 parties en poids, et

d) du dioxyde de titane, en une quantité de 9 à 11 parties en poids.

10. Articles de charcuterie fumés, revêtus de l'agent selon les revendications 1 à 9, en particulier saucisses crues et viande crue.

11. Salami blanc, revêtu de l'agent selon les revendications 1 à 7 et 9.